**Europäisches Patentamt**

**European Patent Office**

**Office européen des brevets**

Veröffentlichungsnummer: **0 290 048**
**A2**

## EUROPÄISCHE PATENTANMELDUNG

Anmeldenummer: **88107347.2**

Anmeldetag: **06.05.88**

Int. Cl.⁴ **F04B 13/00 , F04B 9/14 ,
G01F 11/04**

Priorität: **08.05.87 DE 3715399**

Veröffentlichungstag der Anmeldung:
**09.11.88 Patentblatt 88/45**

Benannte Vertragsstaaten:
**AT CH DE IT LI**

Anmelder: **Schropp, Peter
Eichbergweg 9
D-8980 Kempten(DE)**

Erfinder: **Schropp, Peter
Eichbergweg 9
D-8980 Kempten(DE)**

Vertreter: **von Puttkamer, Nikolaus, Dipl.-Ing.
Pienzenauerstrasse 2
D-8000 München 80(DE)**

### Dosierpumpe für schwerfliessende Flüssigkeiten.

Die Erfindung betrifft eine Dosierpumpe mit einem in einem Zylinder (5) gegen die Kraft eines Energiespeichers (16) bewegbaren Kolben (6), wobei zwischen einem Bodenteil (9) des Zylinders (5) und dem Kolben (6) eine Dosierkammer (15) gebildet ist. Ein Abgabeventil (20) ist in dem Kolben (6) angeordnet und weist einen Kanal (22), der mit der Dosierkammer (15) in Verbindung steht, eine Ventilkammer (23), die mit dem Kanal (22) verbunden ist und deren Durchmesser größer ist als der Kanaldurchmesser, und eine Ventilkugel (24) auf. Ein Abgaberohr (21) ragt in die Ventilkammer (23) hinein und ist durch eine axiale Aussparung (25) in dem Zylinder (5) geführt. Ein Ansaugventil (10) weist eine Ventilkammer (11), die mit dem Dosierraum (15) verbunden ist und eine Ventilkugel (12) auf. Der Durchmesser der Ventilkammer (11) des Ansaugventiles (10) ist größer als der Durchmesser des Kanales (14) des Ansaugventiles. Die Ventilkugel (24) des Abgabeventiles (20) sinkt in der zu dosierenden Flüssigkeit in den Ventilsitz ab, während die Ventilkugel (12) des Ansaugventiles (10) in der zu dosierenden Flüssigkeit (42) eine Auftrieb erfährt und den Ventilsitz freigibt.

EP 0 290 048 A2

## Dosierpumpe für schwerfließende Flüssigkeiten

Die Erfindung betrifft eine Dosierpumpe für schwerfließende Flüssigkeiten nach dem Oberbegriff des Patentanspruches 1.

Die Aufgabe der Erfindung besteht darin, eine Dosierpumpe der eingangs genannten Art dahingehend zu verbessern, daß eine saubere Entnahme einer genau dosierten Flüssigkeitsmenge aus einem Behälter möglich ist, ohne daß die Flüssigkeit zwischen einzelnen Entnahmevorgängen aus dem Entnahmerohr tropft.

Diese Aufgabe wird durch eine Dosierpumpe der eingangs genannten Art gelöst, die durch die in dem kennzeichnenden Teil des Patentanspruches 1 angegebenen Merkmale gekennzeichnet ist.

Ein wesentlicher Vorteil der vorliegenden Dosierpumpe besteht darin, daß bei der Entnahme von schwerfließenden Flüssigkeiten, wie z.B. Sirup, der zur Zubereitung von Milchmixgetranken verwendet wird, zwischen einzelnen Entnahmevorgängen kein Austropfen des Sirups aus dem Entnahmerohr erfolgt. Dadurch können mühsame Reinigungsoperationen vermieden werden. Die dabei erzielbare Sauberkeit entspricht den üblichen Hygieneanforderungen.

Vorteilhafterweise ist die vorliegende Dosierpumpe so aufgebaut, daß eine beliebige Einstellung der zu entnehmenden Flüssigkeitsmengen zwischen Null und maximalem Fassungsvermogen erfolgen kann.

Die vorliegende Dosierpumpe ist so ausgebildet, daß ein Verkleben der aneinander gleitenden Flächen des Kolben-·Zylindersystemes der Pumpe bei der Verwendung klebriger Flüssigkeiten vollständig vermieden wird. Dadurch wird vorteilhafterweise der Einsatzbereich der vorliegenden Dosierpumpe wesentlich vergrößert.

Vorteilhafterweise werden z.B. im Sirup oder dergleichen enthaltene Fruchtteile bei der Operation der vorliegenden Dosierpumpe infolge der aufgebrachten hohen Druckkrafte, die durch den stabilen Aufbau der Pumpe und die verwendete Hebelkonstruktion erzielt werden, mitgefördert. Ein Verstopfen der Pumpe kann dadurch sicher vermieden werden. Zudem können deshalb auch hochviskose Medien dosiert werden.

Die Entnahme der Flüssigkeiten kann besonders vorteilhaft aus beliebig geformten Vorratsbehältern erfolgen.

Die vorliegende Dosierpumpe ist vorteilhafterweise einfach aufgebaut, nahezu wartungsfrei betreibbar, leicht reinigbar und einfach zerlegbar.

Weitere vorteilhafte Ausgestaltungen der Erfindung gehen aus den Unteransprüchen hervor.

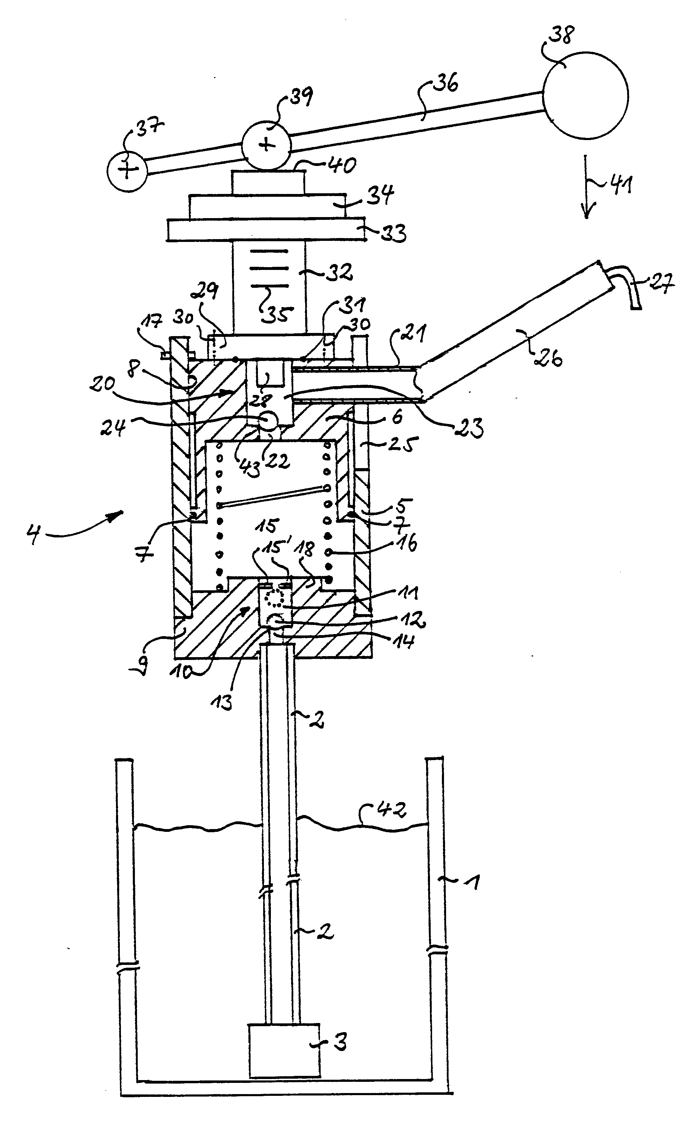

Im folgenden wird die Erfindung im Zusammenhang mit der Figur näher erläutert.

In der Figur ist ein Behälter, dem die zu dosierende Flüssigkeit entnommen wird, mit 1 bezeichnet. In das offene obere Ende des Behälters 1 ragt das Ansaugrohr 2 der vorliegenden Dosierpumpe hinein, wobei dessen unteres Ende mit einem an sich bekannten Sieb 3 versehen ist, dessen Aufgabe darin besteht zu verhindern, daß in der zu dosierenden Flüssigkeit gegebenenfalls vorhandene relativ große Körper, die die Funktion der Pumpe schädlich beeinflussen könnten, vermieden wird. Insbesondere bei der Dosierung von sirupähnlichen Flüssigkeiten, in denen sich häufig größere Fruchtteilen und dergl. befinden, kann durch das Sieb 3 ein Verstopfen der Pumpe vermieden werden. Die mit 4 bezeichnete Dosierpumpe ist an einem in der Figur nicht näher dargestellten Gestell oder dergl. oberhalb des Behälters 1 befestigt. Die Dosierpumpe 4 weist ein Gehäuse 5 auf, das vorzugsweise kreiszylinderförmig ausgebildet ist. In dem kreiszylinderförmigen Gehäuse 5 befindet sich ein Kolben 6, an dessen dem Behälter 1 zugewandten Ende sich eine O-Ringdichtung 7 befindet. Vorzugsweise ist der Kolben 6 so ausgebildet, daß er an seinem dem O-Ring 7 gegenüberliegenden Ende eine Gleitfläche 8 aufweist, deren axiale Länge relativ kurz bemessen ist, so daß im schlimmsten Falle, wenn nämlich bei der Dosierung sehr klebriger Flüssigkeiten Flüssigkeitsmengen am O-Ring 7 vorbeigelangen sollten, ein Verkleben des Kolbens 6 im Zylinder 5 vermieden werden kann, weil die aufgebrachten großen Druckkräfte und die kleine axiale Länge der Gleitfläche 8 ein Festsetzen des Kolbens 6 im Zylinder 5 zuverlässig verhindern. An seinem dem Behälter 1 zugewandten Ende weist der Zylinder 5 ein ihn verschließendes Bodenteil 9 auf, in das das obere Ende des Ansaugrohres 2 geführt ist. Vorzugsweise wird der obere Endbereich des Ansaugrohres 2 in eine entsprechende Bohrung des Bodenteiles 9 eingepreßt. An der dem Innenraum des Zylinders 5 zugewandten Seite weist das Bodenteil 9 ein Ansaugventil 10 auf, das im wesentlichen aus einer Ventilkammer 11, einem Ventilkörper in der Form einer Kugel 12 und einem Ventilsitz 13 besteht, der dadurch gebildet ist, daß die Ventilkammer 11 zum Ansaugrohr 2 hin radial verengt ist, wobei der Durchmesser der radialen Verengung 14 kleiner ist als der Durchmesser der Kugel 12. Um ein Herausfallen der Kugel 12 aus der Ventilkammer 11 zu verhindern, sind am oberen Ende der Ventilkammer 11 vorzugsweise Sperrstifte 15' vorgesehen, die von der Innenwandung der Ventilkammer 11 nach innen vorstehen. Die Dosierkammer 15 befindet sich zwischen der Innenseite des Bodenteiles 9 und der dieser zugewandten Seite des Kolbens 6. In der Dosierkammer 15 befindet sich ein Energiespeicher 16, der vorzugsweise die Form einer Schraubenfeder aufweist, deren eines Ende sich am Bodenteil 9 abstützt und deren anderes Ende am Kolben 6 anliegt. Die Schraubenfeder 16 drückt den Kolben 6 gegen einen schematisch dargestellten oberen Anschlag 17.

Um eine Zentrierung der Schraubenfeder 16 zu erreichen, greift ihr eines Ende vorzugsweise in eine kreisförmige Vertiefung des Kolbens 6 ein, während ihr anderes Ende über einen Mittelansatz 18 des Bodenteiles 9 geführt ist. Durch die Anordnung des einen Endes der Schraubenfeder 16 in der genannten Vertiefung 19 des Koblens 6 wird gleichzeitig erreicht, daß bei einer vorgegebenen axialen Länge des Kolbens 6, die erforderlich ist, um ein kippfreies Arbeiten des Kolbens zu ermöglichen, die Gesamtlänge der Dosierpumpe 4 so klein wie möglich gehalten werden kann.

Im oberen Endbereich des Kolbens 6 befinden sich ein Abgabeventil 20, das ähnlich aufgebaut ist wie das Ansaugventil 10, und das Ausgaberohr 21. Das Abgabeventil 20 besteht aus einem in den Dosierrraum 15 hineinragenden Kanal 22, der in eine Ventilkammer 23 übergeht, deren Durchmesser ·größer ist als derjenige des Kanales 22 und einem Ventilkörper 24, bei dem es sich vorzugsweise ebenfalls um eine Kugel handelt. Der Ventilsitz 47 wird am Übergang zwischen der Ventilkammer 23 und dem Kanal 22 gebildet, wobei der Durchmesser des Kanales 22 kleiner bemessen ist als der Durchmesser der Kugel 24. Das Ausgaberohr 21 ragt von einer Seite her in radialer Richtung in die Ventilkammer 23 hin. Damit das Ausgaberohr der Hin-und Herbewegung des Kolbens 6 folgen kann, befindet sich in dem Zylinder 5 eine in axialer Richtung verlaufende Aussparung 25. Dadurch, daß das Ausgaberohr durch diese Aussparung 25 geführt ist, wird vorteilhafterweise eine Verdrehung des Ausgaberohres 21 verhindert, so daß dieses immer in einer bestimmten Richtung zur Flüssigkeitsabgabe fixiert ist.

Das Ausgaberohr 21 weist einen nach oben verlaufenden, schrägen Bereich 26 auf, an dessen Ende ein Abgabekrümmer 27 angesetzt ist. Dabei ist der Innendurchmesser dieses Abgabekrümmers 27 so bemessen, daß durch die bewirkte Kapilarwirkung die Flüssigkeitsoberfläche am Ende der in dem Abgabekrümmer 27 enthaltenen Flüssigkeitssäule nach innen ragt. Dadurch wird ein Austropfen verhindert. Zudem ist der schräge Bereich 26 so gestaltet, daß das Ende des Ausgabekrümmers 27 höher liegt als das in die Ventilkammer 23 hineinragende Ende des Bereiches 21. Dadurch wird erreicht, daß die im Ausgaberohr enthaltene Flüssigkeit versucht, in Richtung auf die Ventilkammer 23 zu fließen.

Um zu verhindern, daß die Ventilkugel 24 das Ende des Ausgaberohres 21 zusetzt, ist vorzugsweise ein Sperrzapfen 28 vorgesehen, der die Öffnung des Ausgaberohres 21 teilweise überragt und vorzugsweise von der Ebene der Öffnung des Ausgaberohres 21 beabstandet ist.

Um ein Nachtropfen der Dosierpumpe 4 zwischen einzelnen Entnahmeoperationen zu verhindern, wird das Gewicht der Ventilkugel 24 so bemessen, daß sie das Abgabeventil 20 durch ihre Schwerkraft bedingt normalerweise immer verschließt. Vorzugsweise wird als Ventilkugel 24 eine Stahlkugel verwendet. Dagegen wird das Gewicht der Ventilkugel 12 so eingestellt, daß sie in der zu dosierenden Flüssigkeit einen Auftrieb erfährt, so daß sie normalerweise an den Sperrstützen 15 anliegt, wie dies in der Figur durch die punktierte Linie dargestellt ist. Vorzugsweise besteht die Ventilkugel 12 aus einem Kunststoffmaterial.

Die Ventilkammer 23 ist an ihrem oberen Ende durch ein Deckelteil 29 verschlossen, das vorzugsweise mit der Hilfe von Bolzen 30 an der Oberfläche des Kolbens 6 unter Zwischenschaltung einer O-Ringdichtung 31 verschraubt wird. Vorzugsweise ist der bereits erwähnte Sperrzapfen 28 einstückig an das Deckelteil 29 angeformt. Am oberen Ende ist vorzugsweise einstückig an das Deckelteil 29 ein mittiger Gewindezapfen 32 angesetzt, auf dem eine Hubstelleinstellscheibe 33 und eine Konterscheibe 34 aufgeschraubt sind. Die Hubeinstellung bzw. die Einstellung der Dosiermenge erfolgt durch Höhenverstellung der Scheiben 33 und 34, wobei der Durchmesser der Hubeinstellscheibe 33 größer ist als der Durchmesser des Zylinders 5, so daß die Hubeinstellscheibe bei der Abwärtsbewegung des Kolbens 6 am oberen Ende des Zylinders 5 zur Anlage gelangt. Zur Erleichterung der Einstellung bestimmter Dosiermengen können am Gewindezapfen 32 entsprechende Markierungen 35 vorgesehen werden.

Zur Betätigung der Dosierpumpe 4 ist ein ·schematisch dargestellter Hebel 36 vorgesehen, dessen eines Ende um einen Drehpunkt 37 drehbar gelagert ist, während an seinem anderen Ende, das sich oberhalb des Ausgaberohres 21 befindet, ein Griff 38 befestigt ist. Der Hebel 36 verläuft über dem oberen Ende des Gewidnezapfes 32, wobei am Hebel 36 eine drehbare Laufrolle 39 befestigt ist, die auf der freien Fläche 40 des Gewindezapfens 32 aufliegt. Der Abstand zwischen dem Drehpunkt 37 und der Laufrolle 39 ist wesentlich kleiner bemessen als der Abstand zwischen dem Griff 38 und der Laufrolle 39, so daß die bereits erwähnten hohen Druckkräfte erzielbar sind. Durch die Laufrolle 39 wird ein unschädliches und freies Abrollen auf der Fläche 40 ermöglicht.

Im folgenden wird nun die Funktion der beschriebenen Dosierpumpe 4 näher erläutert. Dabei wird zunächst die Ansaugoperation beschrieben.

Hierzu wird das Ansaugrohr 2 in die Flüssigkeit 42 des Behälters 1 eingetaucht. Durch Bewegen des Griffes 38 in der Richtung des Pfeiles 41 werden der Gewindezapfen 32 und der Kolben 6 in den Zylinder 5 hineingedrückt, bis der Hubeinstellring 33 am oberen Ende des Zylinders 5 anliegt. Während dieses Vorganges ist das Ansaugventil 10 geschlossen, während die in der Dosierkammer 15 befindliche Luft durch das Abgabeventil 20 entweichen kann. Bei der Freigabe des Griffes 41 wird der Kolben 6 durch die Kraft der Schraubenfeder 16 nach oben bewegt, bis er an den Anschlägen 17 anschlägt. Bei diesem Vorgang ist das Abgabeventil 20 geschlossen, während das Ansaugventil 10 geöffnet wird und die Flüssigkeit 42 in den Dosierraum 15 eingesaugt wird.

Zur Abgabe einer Dosiermenge der Flüssigkeit wird nun wieder der Griff 38 in Pfeilrichtung 41 bewegt. Bei diesem Vorgang wird das Ansaugventil 12 geschlossen, während das Abgabeventil 22 geöffnet wird und die in der Dosierkammer 15 enthaltene Flüssigkeit in das Ausgaberohr 21 strömt. Bei der nachfolgenden Freigabe des Griffes 38 wird in der bereits beschriebenen Weise wieder Flüssigkeit 42 aus dem Behälter 1 in die Dosierkammer 15 eingeführt.

Zwischen den einzelnen Ausgabevorgängen ist das Ausgabeventil 20 infolge des Gewichtes der Ventilkugel 24 stets geschlossen, während das Ansaugventil 10 immer geöffnet ist, weil die Kugel 12 den bereits beschriebenen Auftrieb erfährt und an den Sperrstiften 15' anliegt. Dadurch wird erreicht, daß die in der Dosierkammer 15 enthaltene Flüssigkeit quasi an der Ventilkugel 24 hängt und er dazu neigt, in Richtung auf den Behälter zurückzufließen, anstatt in das Ausgaberohr 21 einzutreten.

**Ansprüche**

1. Dosierpumpe mit einem in einem Zylinder (5) gegen die Kraft eines Energiespeichers (16) bewegbaren Kolben (6), wobei zwischen einem Bodenteil (9) des Zylinders (5) und dem Kolben (6) eine Dosierkammer (15) gebildet ist, der über ein Ansaugventil (10) und ein Ansaugrohr (2) das in einen Behälter (1) eintaucht, Flüssigkeit (42) aus dem Behälter (1) zuführbar ist, und aus der über ein Abgabeventil (20) Flüssigkeit (42) in ein Abgaberohr (21) führbar ist, dadurch gekennzeichnet, daß das Abgabeventil (20) in dem Kolben (6) angeordnet ist und einen Kanal (22), der mit dem Dosierraum (15) in Verbindung steht, eine Ventilkammer (23), die mit dem Kanal (22) verbunden ist und deren Durchmesser größer ist als der Kanaldurchmesser, und eine Ventilkugel (24) aufweist, daß der Ventilsitz (43) des Abgabeventiles (20) am Übergang zwischen der Ventilkammer (23) und dem Kanal (22) gebildet ist, daß das Abgaberohr (21) in die Ventilkammer (23) hineinragt und durch eine axiale Aussparung (25) in dem Zylinder (5) geführt ist, daß das Ansaugventil (10) eine Ventilkammer (11), die mit dem Dosierraum (15) verbunden ist, und einen Kanal (14), der mit dem Ansaugrohr (2) verbunden ist, aufweist, daß der Durchmesser der Ventilkammer (11) des Ansaugventiles (10) größer ist als der Durchmesser des Kanales (14) des Ansaugventiles, daß ein Ventilsitz für eine Ventilkugel (12) in der Ventilkammer (11) des Ansaugventiles zwischen der Ventilkammer (11) und dem Kanal (14) des Ansaugventiles (10) gebildet ist, daß die Ventilkugel (24) des Abgabeventiles (20) so schwer ist, daß sie in der zu dosierenden Flüssigkeit absinkt und am Ventilsitz (43) des Abgabeventiles (20) anliegt, und daß das Gewicht der Ventilkugel (12) des Ansaugventiles (10) so bemessen ist, daß sie in der zu dosierenden Flüssigkeit (42) einen Auftrieb erfährt und den Ventilsitz (13) des Ansaugventiles (10) freigibt.

2. Dosierpumpe nach Anspruch 1, dadurch gekennzeichnet daß die Ventilkammer (11) des Ansaugventiles (10) an ihrem der Dosierkammer (15) zugewandten Ende wenigstens einen in den Innenraum der Ventilkammer (11) des Ansaugventiles (10) hineinragenden Sperrstift (15) aufweist, der verhindert, daß die Ventilkugel (12) des Ansaugventiles den Ventilraum (11) des Ansaugventiles verläßt.

3. Dosierpumpe nach Anspruch 1 oder 2, dadurch gekennzeichnet, daß das in die Ventilkammer (23) des Abgabeventiles (20) hineinragende Ende des Abgaberohres (21) teilweise von einem Sperrzapfen (28) überdeckt wird, der verhindert, daß die Ventilkugel (24) des Abgabeventiles (20) in das Abgaberohr (21) eintritt.

4. Dosierpumpe nach einem der Ansprüche 1 bis 3, dadurch gekennzeichnet, daß der Kolben (6) an seinem der Dosierkammer (15) zugewandten Ende eine O-Ringdichtung (7) aufweist, die an der Innenfläche des Zylinders (6) gleitbar anliegt, und daß der Kolben (6) an seinem der Dosierkammer (15) abgewandten Ende eine an der Innenwandung des Zylinders (6) gleitende Gleitfläche (8) besitzt, deren axiale Länge im Vergleich zur Gesamtlänge des Kolbens (6) kurz bemessen ist.

5. Dosierpumpe nach einem der Ansprüche 1 bis 4, dadurch gekennzeichnet, daß das Ansaugrohr (21) über einen schräg nach oben verlaufenden Bereich (26) mit einem Abgabekrümmer (27) verbunden ist, dessen Öffnung höher liegt als die Öffnung des in die Ventilkammer (23) des Abgabeventiles (20) hineinragenden Endes des Abgaberohres (21).

6. Dosierpumpe nach einem der Ansprüche 1 bis 5, dadurch gekennzeichnet, daß an dem der Dosierkammer (15) abgewandten Ende des Kolbens (6) ein Zapfen (32) befestigt ist, dessen freie Endfläche (40) an einer Laufrolle (39) anliegt, die drehbar an einem Hebelarm (36) befestigt ist, dessen eines Ende um einen Drehpunkt (37) verschwenkbar ist und an dessen anderem Ende ein Griff (38) befestigt ist.

7. Dosierpumpe nach Anspruch 6, dadurch gekennzeichnet, daß der Zapfen (32) als Gewindezapfen ausgebildet ist, auf dem eine Hubeinstellscheibe (33) verschraubbar ist, deren Durchmesser etwa dem Durchmesser des Zylinders (5) entspricht.

8. Dosierpumpe nach Anspruch 7, dadurch gekennzeichnet, daß der Hubeinstellscheibe (33) eine auf dem Gewindezapfen (32) verschraubbare Konterscheibe (34) zugeordnet ist.

9. Dosierpumpe nach einem der Ansprüche 6 bis 8, dadurch gekennzeichnet, daß der Zapfen (32) an einem Deckelteil (29) befestigt ist, das die Ventilkammer (23) des Abgabeventiles (20) verschließt und an dem der Sperrzapfen (28) befestigt ist.

10. Dosierpumpe nach einem der Ansprüche 6 bis 9, dadurch gekennzeichnet, daß der Abstand zwischen dem Drehpunkt (37) und der Laufrolle (39) des Hebelarmes (36) kleiner ist als der Abstand zwischen der Laufrolle (39) und dem Griff (38) des Hebelarmes (36).

11. Dosierpumpe nach einem der Ansprüche 1 bis 10, dadurch gekennzeichnet, daß der Zylinder (5) eine Anschlageinrichtung (17) zur Begrenzung des Hubes des Kolbens (6) aufweist.

12. Dosierpumpe nach einem der Ansprüche 1 bis 11, dadurch gekennzeichnet, daß das freie Ende des Ansaugrohres (2) mit einem Siebteil (3) versehen ist.